# EUROPEAN PATENT SPECIFICATION

(11) **EP 1 948 504 B1**
(45) Date of publication and mention of the grant of the patent: **14.04.2010**
(21) Application number: 06818523.0
(22) Date of filing: 14.11.2006
(51) Int. Cl.: B64C 23/06

(54) **BRAKE FLAP FOR AN AIRCRAFT**
BREMSKLAPPE FÜR EIN FLUGZEUG
VOLET DE FREINAGE POUR AERONEF

(30) Priority: 15.11.2005 DE 102005054248; 14.12.2005 US 750616 P
(43) Date of publication of application: 30.07.2008
(73) Proprietor: Airbus Operations GmbH, 21129 Hamburg (DE)
(72) Inventor: BENDER, Klaus, 22765 Hamburg (DE)
(74) Representative: Kopf, Korbinian Paul
(86) International application number: PCT/EP2006/010905
(87) International publication number: WO 2007/057155

(56) References cited:
- EP-A- 1 527 992
- WO-A2-00/02775
- JP-A- 2 032 000
- US-A- 5 088 665
- US-A1- 2001 032 907
- US-A1- 2005 067 525
- [Online] XP007901604 Retrieved from the Internet: URL:HTTP://WEB.ARCHIVE.ORG/WEB/20030605050 423/HTTP://F22FIGHTER.COM/F22COMPARISON.JP G> [retrieved on 2003-06-05]

## Description

This application claims the benefit of the filing date of German Patent Application No. 10 2005 054 248.4 filed November 15, 2005 and of United States Provisional Patent Application No. 60/750,616 filed December 14, 2005.

The invention relates to a brake flap for an aircraft, which brake flap, for the purpose of delaying the aircraft, can be set at an angle relative to the airstream flowing around it, wherein the flap comprises an edge which when set at an angle is spaced apart from the exterior skin of the aircraft.

To increase resistance during the landing approach and during the landing, modem commercial aircraft require brake flaps. A known solution to this are flaps on the top of the wing, which flaps are arranged between the landing flaps and the rear spar, and are usually referred to as spoilers. Such flaps can equally be used also for roll control and for decreasing lift. More rarely seen is a solution in which the brake flaps are arranged on the fuselage, usually at the rear. In both cases these are essentially simple sheet metal parts that are set at an angle against the airstream flowing around the aircraft.

By increasing the resistance by means of brake flaps or spoilers, aircraft can fly a steeper landing approach, which among other things can be used to reduce noise in the approach path. However, the noise reduction achieved in this way is partly cancelled out by the noise generated by the brake flap itself. The brake flaps are also used for retardation during the landing procedure.

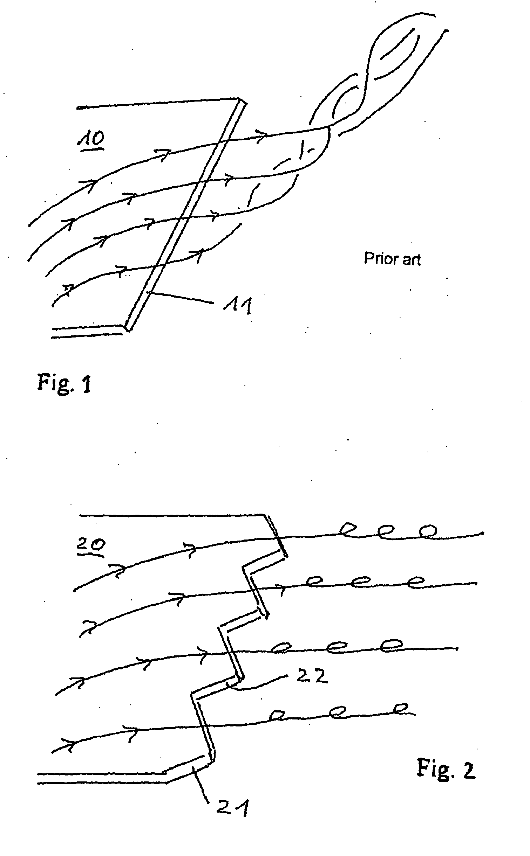

A significant mechanism in the noise generation on a brake flap is due to the fact that a single pronounced vortex forms on the edge of the flap, as shown in Figure 1. Normally one end of the flap is hinged to the aircraft, while the edge vortex forms at the free edge that is opposite the hinged end and/or at the lateral edges.

US 2005/067 525 discloses an aircraft thickness/camber control device for low sonic boom.

It is the object of the invention to create a brake flap for an aircraft that with essentially identical effectiveness causes less noise.

This object is met by a brake flap with the characteristics of claim 1.

The individual edge sections that divide the edge vortex into a number of partial vortices are formed by holes or recesses that are provided near the free edge in the brake flap.

The holes or recesses in the brake flap can be provided in the form of through-perforations in the flap.

As an alternative, the holes or recesses in the brake flap can be provided in the form of depressions that do not perforate the flap.

Advantageous embodiments and improvements of the brake flap according to the invention are stated in the subordinate claims.

The invention provides a brake flap for an aircraft, which brake flap, for the purpose of delaying the aircraft, can be set at an angle relative to the airstream flowing around it, wherein the flap comprises a free edge which when set at an angle is spaced apart from the exterior skin of the aircraft, and generates an edge vortex in the airstream flowing around the aircraft. The free edge comprises a number of individual edge sections that divide the edge vortex into a number of partial vortices.

An advantageous embodiment of the invention provides for the individual edge sections that divide the edge vortex into a number of partial vortices to be formed by a wave-shaped design of the free edge.

Another advantageous embodiment of the invention provides for the individual edge sections that divide the edge vortex into a number of partial vortices to be formed by a zigzag design of the free edge.

A further advantageous embodiment of the invention provides for the individual edge sections that divide the edge vortex into a number of partial vortices to be formed by shoulders, lugs or projections provided near the free edge on the surface of the brake flap.

Preferably one end of the flap is hinged to the aircraft while the individual edge sections that divide the edge vortex into a number of partial vortices are provided on the free edge that is opposite the hinged end of the flap.

Another advantageous embodiment of the invention provides for one end of the flap to be hinged to the aircraft, while the individual edge sections that divide the edge vortex into a number of partial vortices are provided on one lateral edge or both lateral edges of the flap.

A further advantageous embodiment of the invention provides for one end of the flap to be hinged to the aircraft, while the individual edge sections that divide the edge vortex into a number of partial vortices are provided on the free edge that is opposite the hinged end of the flap, and on one lateral edge or both lateral edges of the flap.

Preferably, the flap can also be used for roll control of the aircraft.

Below, exemplary embodiments of the invention are explained with reference to the drawings.

The following are shown:
Figure 1 a perspective view of part of a brake flap for an aircraft, which brake flap, for the purpose of delaying the aircraft, can be set at an angle relative to the airstream flowing around it, according to prior art;
Figure 2 a perspective view of part of a brake flap for an aircraft, which brake flap, for the purpose of delaying the aircraft, can be set at an angle relative to the airstream flowing around it, according to a preferred exemplary embodiment of the invention;
Figures 3a) to e) perspective views, each showing part of a brake flap for an aircraft, which brake flap, for the purpose of delaying the aircraft, can be set at an angle relative to the airstream flowing around it, according to prior art (Figure 3a)) and according to several preferred exemplary embodiments of the invention (Figures 3b) to e)), wherein Figure 3c) depicts the exemplary embodiment already shown in Figure 2.

Figure 1 shows a perspective view of part of a brake flap for an aircraft, which brake flap, for the purpose of delaying the aircraft, can be set at an angle relative to the airstream flowing around it, according to prior art. The flap 10 comprises a free edge 11, which when set at an angle is spaced apart from the exterior skin of the aircraft and generates an edge vortex in the airstream flowing around the aircraft. This edge vortex is a significant source of noise that is generated when the brake flap is set at an angle, and that can be a nuisance during the landing approach.

Figure 2 shows a perspective view of a brake flap 20 for an aircraft according to an exemplary embodiment of the invention, which brake flap, for the purpose of delaying the aircraft, can be set at an angle relative to the airstream flowing around it. The flap 20 comprises a free edge 21, which when set at an angle is spaced apart from the exterior skin of the aircraft and which generates an edge vortex in the airstream flowing around the aircraft. The free edge 21 comprises a number of individual edge sections 22 that divide the edge vortex into a number of partial vortices. In the exemplary embodiment shown in Figure 2 the individual edge sections 22 comprise a zigzag design of the free edge 21.

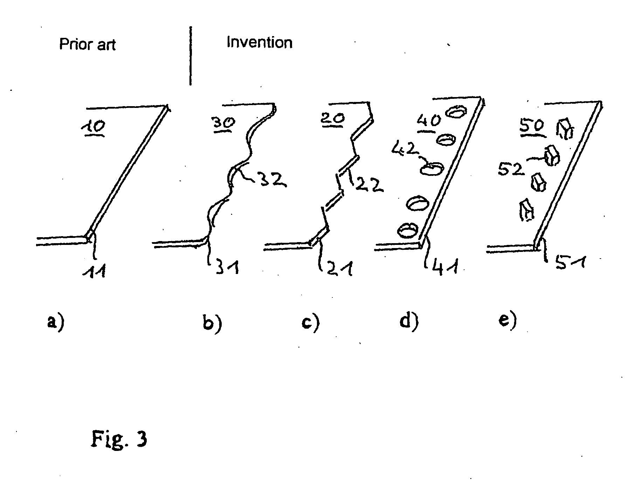

Figure 3a) shows a perspective view of part of the brake flap 10 for an aircraft, which brake flap has already been shown in Figure 1, according to prior art.

Figures 3b) to e) show perspective views of parts of a brake flap 20; 30; 40; 50 for an aircraft, according to several preferred exemplary embodiments of the invention, which embodiments on the free edge 21; 31; 41; 51 comprise a number of individual edge sections 22; 32; 42; 52 that divide the edge vortex into a number of partial vortices.

In the exemplary embodiment shown in Figure 3b) the individual edge sections that divide the edge vortex into a number of partial vortices 32 comprise a wave-shaped design of the free edge 31.

Figure 3c) again shows the exemplary embodiment shown in Figure 2, in which the individual edge sections 22 comprise a zigzag design of the free edge 21.

In the exemplary embodiment shown in Figure 3d), the individual edge sections that divide the edge vortex into a number of partial vortices are formed by holes or recesses 42 that are provided near the free edge 41 in the brake flap 40. The holes or recesses 42 provided in the brake flap 40 can be provided in the form of through-perforations in the flap 40, as is the case in the shown exemplary embodiment of Figure 3d), or they can be provided in the form of depressions on the outside of the flap 40, which depressions do not perforate said flap.

In the exemplary embodiment shown in Figure 3e), the individual edge sections that divide the edge vortex into a number of partial vortices are formed by shoulders or projections 52 provided near the free edge 51 on the surface of the brake flap 50.

Instead of the exemplary embodiments shown, the edge sections provided on the free edge of the brake flap, which divide the edge vortex into a number of partial vortices, can also be designed in some other way, wherein it is essential that instead of the single noise-generating edge vortex shown in Figure 1, a number of individual smaller edge vortices are generated, which edge vortices generate less noise and may even be in a position to mutually attenuate or cancel each other out in relation to noise generation. In the context of this application the term "edge sections" refers to sections that are provided in the vicinity of the edge; they need not be constituted by the edge of the flap itself, as is the case in the exemplary embodiments of Figures 3b) and c), but instead they can also be provided near the edge, as is the case in the exemplary embodiments shown in Figures 3d) and e).

Usually, one end of the flap 20; 30; 40; 50 is hinged on the aircraft, while the individual edge sections 22; 32; 42; 52 that divide the edge vortex into a number of partial vortices can be provided on the free edge 21; 31; 41; 51 of the flap 20; 30; 40; 50, which free edge 21; 31; 41; 51 is opposite the hinged end, i.e. typically at the rear longitudinal edge, as shown in Figures 2 and 3b) to e), but as an alternative, or in addition, said individual edge sections 22; 32; 42; 52 can also be provided on the lateral edges of the brake flap.

The flap 20; 30; 40; 50 can be arranged on the top of the wing of the aircraft, as is usually the case in modem commercial aircraft; however, the flap 20; 30; 40; 50 can also be arranged on the fuselage of the aircraft. The flap 20; 30; 40; 50 can in addition be used for roll control of the aircraft.

### List of reference characters

- 10; 20; 30; 40; 50: Brake flap
- 11; 21; 31; 41; 51: Free edge
- 12; 22; 32; 42; 52: Edge section

## Claims

1. A brake flap for an aircraft, which brake flap, for the purpose of delaying the aircraft, can be set at an angle relative to the airstream flowing around it, wherein the flap (20; 30; 40; 50) comprises a free edge (21; 31; 41; 51) which when set at an angle is spaced apart from the exterior skin of the aircraft, and generates an edge vortex in the airstream flowing around said aircraft, wherein the free edge comprises a number of individual edge sections (22; 32; 42; 52) that divide the edge vortex into a number of partial vortices, wherein the flap is arranged at least on one of a top of the wing and a fuselage of the aircraft,
**characterized in that** the individual edge sections that divide the edge vortex into a number of partial vortices are formed by holes or recesses (42) that are provided near the free edge (41) in the brake flap 40.

2. The brake flap of claim 1, wherein the individual edge sections (32) that divide the edge vortex into a number of partial vortices are formed by a wave-shaped design of the free edge (31).

3. The brake flap of claim 1, wherein the individual edge sections (22) that divide the edge vortex into a number of partial vortices are formed by a zigzag design of the free edge (21).

4. The brake flap of claim 1, wherein the holes or recesses (42) that are provided in the brake flap are provided in the form of through-perforations in the flap (40).

5. The brake flap of claim 1, wherein the holes or recesses (42) that are provided in the brake flap (40) are provided in the form of depressions on the outside of the flap, which depressions do not perforate the flap.

6. The brake flap of claim 1, wherein the individual edge sections that divide the edge vortex into a number of partial vortices are formed by shoulders or projections (52) provided near the free edge (51) on the surface of the brake flap (50).

7. The brake flap of claim 1, wherein one end of the flap (20; 30; 40; 50) is hinged to the aircraft while the individual edge sections that divide the edge vortex into a number of partial vortices are provided on the free edge (21; 31; 41; 51) of the flap, which free edge is located opposite the hinged end.

8. The brake flap of claim 1, wherein one end of the flap (20; 30; 40; 50) is hinged to the aircraft, while the individual edge sections (22; 32; 42; 52) that divide the edge vortex into a number of partial vortices are provided on one or both lateral edges of the flap.

9. The brake flap of claim 1, wherein one end of the flap (20, 30, 40, 50) is hinged to the aircraft, while the individual edge sections (22; 32; 42; 52) that divide the edge vortex into a number of partial vortices are provided on the free edge (21; 31; 41; 51) that is opposite the hinged end of the flap and on one lateral edge or both lateral edges of the flap.

10. The brake flap of claim 6, wherein the flap (20; 30; 40; 50) is also used for roll control of the aircraft.

## Patentansprüche

1. Bremsklappe für ein Flugzeug, welche zur Verzögerung des Flugzeuges gegen die das Flugzeug umgebende Luftströmung in einem Winkel anstellbar ist, wobei die Klappe (20; 30; 40; 50) eine freie Kante (21; 31; 41; 51) aufweist, die beim Anstellen einen Abstand zur Außenhaut des Flugzeugs einnimmt und einen Kantenwirbel in der das Flugzeug umgebenden Luftströmung erzeugt, wobei die freie Kante eine Anzahl von einzelnen Kantenabschnitten (22; 32; 42; 52) aufweist, die den Kantenwirbel in einer Anzahl von Teilwirbeln unterteilt, wobei die Klappe an einer Oberseite des Flügels und/oder an einem Rumpf des Flugzeuges angeordnet ist,
**dadurch gekennzeichnet, dass** die einzelnen Kantenabschnitte, die den Kantenwirbel in eine Anzahl von Teilwirbeln unterteilen, durch Löcher oder Aussparungen (42) gebildet sind, die nahe der freien Kante (41) der Bremsklappe (40) vorgesehen sind.

2. Bremsklappe nach Anspruch 1, wobei die einzelnen Kantenabschnitte (32), die den Kantenwirbel in eine Anzahl von Teilwirbeln unterteilen, durch eine wellenförmige Gestaltung der freien Kante (31) gebildet sind.

3. Bremsklappe nach Anspruch 1, wobei die einzelnen Kantenabschnitte (22), die den Kantenwirbel in eine Anzahl von Teilwirbeln unterteilen, durch eine Zickzackförmige Gestaltung der freien Kante (21) gebildet sind.

4. Bremsklappe nach Anspruch 1, wobei die Löcher oder Aussparungen (42), die in der Bremsklappe ausgebildet sind, in Form von durchgehenden Perforierungen der Klappe (40) vorgesehen sind.

5. Bremsklappe nach Anspruch 1, wobei die Löcher oder Aussparungen (42), die in der Bremsklappe (40) vorgesehen sind, in Form von Vertiefungen an der Außenseite der Klappe vorgesehen sind, wobei die Vertiefungen die Klappe nicht perforieren.

6. Bremsklappe nach Anspruch 1, wobei die einzelnen Kantenabschnitte, die den Kantenwirbel in eine Anzahl von Teilwirbeln unterteilen, durch Ansätze oder Vorsprünge (52) gebildet sind, die nahe der freien Kante (51) an der Oberfläche der Bremsklappe (50) ausgebildet sind.

7. Bremsklappe nach Anspruch 1, wobei eine Seite der Klappe (20; 30; 40; 50) an dem Flugzeug gelagert ist, während die einzelnen Kantenabschnitte, die den Kantenwirbel in eine Anzahl von Teilwirbeln unterteilen, an der freien Kante (21; 31; 41; 51) der Klappe vorgesehen sind, wobei die freie Kante gegenüber der gelagerten Seite angeordnet ist.

8. Bremsklappe nach Anspruch 1, wobei eine Seite der Klappe (20; 30, 40; 50) an dem Flugzeug gelagert ist, wobei die einzelnen Kantenabschnitte (22; 32; 42; 52), die den Kantenwirbel in eine Anzahl von Teilwirbeln unterteilen, an einer oder beiden Seitenkanten der Klappe vorgesehen sind.

9. Bremsklappe nach Anspruch 1, wobei eine Seite der Klappe (20; 30; 40; 50) an dem Flugzeug gelagert ist, wobei die einzelnen Kantenabschnitte (22; 32; 42; 52), die den Kantenwirbel in eine Anzahl von Teilwirbeln unterteilen, an der freien Kante (21; 31; 41; 51), die gegenüber der gelagerten Seite der Klappe angeordnet ist, und an einer Seitenkante oder beiden Seitenkanten der Klappe vorgesehen sind.

10. Bremsklappe nach Anspruch 6, wobei die Klappe (20; 30; 40; 50) auch zur Rollsteuerung des Flugzeugs dient.

## Revendications

1. Volet de freinage pour un avion, lequel volet de freinage, dans le but de ralentir l'avion, peut être réglé un angle par rapport au flux d'air s'écoulant autour de celui-ci, dans lequel le volet (20 ; 30 ; 40 ; 50) comporte un bord libre (21 ; 31 ; 41 ; 51) qui, lorsqu'il est réglé à un angle, est écarté du revêtement extérieur de l'avion, et génère un vortex de bord dans le flux d'air s'écoulant autour dudit avion, dans lequel le bord libre comporte un ensemble de tronçons de bord individuels (22 ; 32 ; 42 ; 52) qui divisent le vortex de bord en un ensemble de vortex partiels, dans lequel le volet est agencé au moins sur un élément parmi un extrados de l'aile et un fuselage de l'avion,
**caractérisé en ce que** les tronçons de bord individuels qui divisent le vortex de bord en un ensemble de vortex partiels sont formés par des trous ou évidements (42) qui sont agencés près du bord libre (41) dans le volet de freinage (40).

2. Volet de freinage selon la revendication 1, dans lequel les tronçons de bord individuels (32) qui divisent le vortex de bord en un ensemble de vortex partiels sont formés par une conception en forme d'onde du bord libre (31).

3. Volet de freinage selon la revendication 1, dans lequel les tronçons de bord individuels (22) qui divisent le vortex de bord en un ensemble de vortex partiels sont formés par une conception en zigzag du bord libre (21).

4. Volet de freinage selon la revendication 1, dans lequel les trous ou évidements (42) agencés dans le volet de freinage sont agencés sous forme de perforations traversantes dans le volet (40).

5. Volet de freinage selon la revendication 1, dans lequel les trous ou évidements (42) agencés dans le volet de freinage (40) sont agencés sous forme de creux sur l'extérieur du volet, qui ne perforent pas le volet.

6. Volet de freinage selon la revendication 1, dans lequel les tronçons de bord individuels qui divisent le vortex de bord en un ensemble de vortex partiels sont formés par des épaulements ou saillies (52) agencés près du bord libre (51) sur la surface du volet de freinage (50).

7. Volet de freinage selon la revendication 1, dans lequel une extrémité du volet (20 ; 30 ; 40 ; 50) est articulée sur l'avion alors que les tronçons de bord individuels qui divisent le vortex de bord en un ensemble de vortex partiels sont agencés sur le bord libre (21 ; 31 ; 41 ; 51) du volet situé à l'opposé de l'extrémité articulée.

8. Volet de freinage selon la revendication 1, dans lequel une extrémité du volet (20 ; 30 ; 40 ; 50) est articulée sur l'avion, alors que les tronçons de bord individuels (22 ; 32 ; 42 ; 52) qui divisent le vortex de bord en un ensemble de vortex partiels sont agencés sur un bord latéral ou les deux bords latéraux du volet.

9. Volet de freinage selon la revendication 1, dans lequel une extrémité du volet (20 ; 30 ; 40 ; 50) est articulée sur l'avion, alors que les tronçons de bord individuels (22 ; 32 ; 42 ; 52) qui divisent le vortex de bord en un ensemble de vortex partiels sont agencés sur le bord libre (21 ; 31 ; 41 ; 51) qui est à l'opposé de l'extrémité articulée du volet et sur un bord latéral ou les deux bords latéraux du volet.

10. Volet de freinage selon la revendication 6, dans lequel le volet (20 ; 30 ; 40 ; 50) est également utilisé pour le contrôle de roulis de l'avion.
